# EUROPÄISCHE PATENTSCHRIFT

(11) **EP 1 510 435 B1**
(45) Veröffentlichungstag und Bekanntmachung des Hinweises auf die Patenterteilung: **25.09.2013**
(21) Anmeldenummer: 04021210.2
(22) Anmeldetag: 09.06.2000
(51) Int. Cl.: B62D 1/18, B62D 1/19

(54) **Lenksäule und Verstellverfahren für eine Lenksäule**
Steering column and adjustment procedure for a steering column
Colonne de direction et procédé de réglage d'une colonne de direction

(30) Priorität: 09.06.1999 DE 29910058 U; 09.06.1999 DE 29910056 U
(43) Veröffentlichungstag der Anmeldung: 02.03.2005
(62) Teilanmeldung aus: 00945629.4
(73) Patentinhaber: ThyssenKrupp Presta Aktiengesellschaft, 9492 Eschen (LI)
(72) Erfinder: Müller, Olaf, 65428 Rüsselsheim (DE)
(74) Vertreter: Seeger · Seeger · Lindner Partnerschaft Patentanwälte

(56) Entgegenhaltungen:
- WO-A-99/58389
- DE-A1- 19 829 239
- US-A- 5 295 712

## Beschreibung

Die Erfindung betrifft eine Lenksäule nach dem Oberbegriff des Anspruchs 1 sowie ein Verstellverfahren für eine Lenksäule nach dem Oberbegriff des Anspruchs 6.

Die auf den vorliegenden Anmelder/Inhaber zurückgehenden älteren deutschen Gebrauchsmusteranmeldungen 298 08 317.5, 299 01 657.9 und 299 00 289.6 sowie die darauf beruhende PCT-Veröffentlichung WO 99/58389A befassen sich allgemein mit einer gattungsgemäßen Sicherheitslenksäule, einem Sicherheitssystem für ein Fahrzeug, einem Fahrzeug mit einem Sicherheitssystem sowie einem Sicherheitsverfahren, jeweils um Insassen bei einem Unfall zu schützen. Die vorliegende Erfindung betrifft Verbesserungen sämtlicher in der früheren Anmeldung behandelten Techniken und Ausführungsbeispiele insbesondere hinsichtlich der Auslösesteuerung der Lenksäule und speziell für verschiedene Insassen und Angurtzustände. Insofern ist der vollständige Offenbarungsgehalt dieser älteren Anmeldungen insbesondere hinsichtlich der Auslösesteuerung der Lenksäule und speziell für verschiedene Insassen und Angurtzustände hiermit durch die Bezugnahmen vollumfänglich in die vorliegenden Unterlagen aufgenommen.

Beispielsweise aus den genannten älteren Anmeldungen ist eine Fahrzeug-Lenksäule bekannt, die im Falle eines Unfalls so verstellt wird, dass jedenfalls das lenkradseitige Ende von einem Insassen weg bewegt wird.

Die vorliegende Erfindung hat das Ziel, diese Lenksäule und ihr Verstellverfahren zum Schutz der Insassen weiter zu verbessern.

Dieses Ziel wird mit einer Lenksäule nach dem Anspruch 1 und einem Verstellverfahren für eine Lenksäule nach dem Anspruch 6 erreicht.

Im Rahmen der Erfindung wird eine Lenksäule für ein Fahrzeug geschaffen, mit Verstelleinrichtungen, die im Falle eines Unfalls auslösbar sind, um zumindest einen Lenkrad-Endbereich der Lenksäule von einem Insassen weg zu bewegen, wobei die Verstelleinrichtungen zum Dämpfen einer Bewegung zumindest des Lenkrad-Endbereiches der Lenksäule von einem Insassen weg Lastaufnahmeeinrichtungen enthalten, die in Abhängigkeit von Insassenparametern steuerbar sind, und wobei die Lastaufnahmeeinrichtungen wenigstens einen Lastaufnehmer enthalten, der durch einen verstellbaren Bolzen ausser Funktion setzbar ist.

Damit kann auf unterschiedliche Umstände, wie beispielsweise einen grossen nicht angegurteten Fahrer, einen grossen angegurteten Fahrer, einen kleinen angegurteten Fahrer, etc. Rücksicht genommen und im Falle eines Unfalls eine jeweils optimale Lenksäulenverstellung durchgeführt werden.

Vorzugsweise Weiterbildungen dieser Lenksäule kennzeichnen sich durch eine oder mehrere der nachfolgend angegebenen Ausgestaltungen:
- Der wenigstens eine Lastaufnehmer ist durch Entriegelung seiner Befestigung mit dem verstellbaren Bolzen ausser Funktion setzbar.
- Der wenigstens eine Lastaufnehmer ist in Abhängigkeit von Insassenparametern steuerbar mit dem verstellbaren Bolzen ausser Funktion setzbar.
- Die Lastaufnahmeeinrichtungen sind für wenigstens zwei Betriebsmodi ausgelegt, wobei vorzugsweise eine Steuerung zum Erfassen von Insassenparametern mittels Detektionseinrichtungen und zum Auslösen eines Betriebsmodus der Verstelleinrichtungen in Abhängigkeit von den Insassenparametern vorgesehen ist.
- Die Verstellung eines Bolzens macht diesen Bolzen unwirksam.
- Der Bolzen ist mittels eines Elektromagneten verstellbar.
- Der verstellbare Bolzen ist ein pyrotechnisch entriegelbarer Bolzen, wobei der Bolzen vorzugsweise über eine Sprengladung verfügt, die insbesondere ggf. von der Steuerung und/oder elektrisch zündbar ist.
- Die Lastaufnahmeeinrichtungen enthalten wenigstens zwei Lastaufnehmer, die durch jeweils einen verstellbaren Bolzen getrennt ausser Funktion setzbar sind.
- Die Lastaufnahmeeinrichtungen enthalten wenigstens zwei Lastaufnehmer, die jeweils getrennt und auch gleichzeitig ausser Funktion setzbar sind oder gleichzeitig in Funktion bleiben können, so dass die Lastaufnahmewirkungen von wenigstens zwei Lastaufnehmem addiert sind.
- Die Lastaufnahmeeinrichtungen enthalten wenigstens zwei Lastaufnehmer enthalten, die einstückig ausgeführt sind.
- Jeder Lastaufnehmer enthält ein Lastaufnahmeblech.
- Wenigstens zwei Lastaufnehmer enthalten ein gemeinsames Lastaufnahmeblech, wobei vorzugsweise
   das Lastaufnahmeblech ein Stanzteil ist, das insbesondere Reisslinien (26) enthält, und/oder
   wobei mit Vorzug
   - die Lenksäule zwei Teleskopteile enthält, von denen dasjenige, das einen Lenkrad-Endbereich enthält, durch Belastung durch einen auf das Lenkrad auftreffenden Insassen in oder über das andere Teleskopteil geschoben wird, und
   - jedes oder das Lastaufnahmeblech mit einem Schlitten, der mit einem Teleskopteil der Lenksäule fest verbunden ist, durch den/die Bolzen lösbar verbunden ist und mit dem anderen Teleskopteil der Lenksäule fest verbunden ist,
und wobei weiter bevorzugt
durch Verstellen eines Bolzens dieser Bolzen wirkungslos wird und das Lastaufnahmeblech und der Schlitten entkoppelt sind.

Vorzugsweise ist bei einer erfindungsgemäßen Lenksäule ferner vorgesehen, dass die Verstelleinrichtungen Antriebseinrichtungen zum Bewirken der Bewegung zumindest des Lenkrad-Endbereiches der Lenksäule von einem Insassen weg enthalten, und dass die Antriebseinrichtungen im Falle eines Unfalls von der Steuerung in Abhängigkeit von den Insassenparametem auslösbar sind. Eine bevorzugte Weiterbildung davon besteht darin, dass die Antriebseinrichtungen einen pyrotechnischen Gasgenerator enthalten und/oder elektrisch auslösbar sind.

Gemäß einer anderen mit Vorteil einzusetzenden Fortbildung der vorliegenden Erfindung ist bei der Lenksäule vorgesehen, dass die Verstelleinrichtungen Lastaufnahmeeinrichtungen zum Dämpfen einer Bewegung zumindest des Lenkrad-Endbereiches der Lenksäule von einem Insassen weg enthalten, und dass die Lastaufnahmeeinrichtungen im Falle eines Unfalls von der Steuerung in Abhängigkeit von den Insassenparametern direkt oder indirekt betreibbar sind. Dies läßt sich vorzugsweise dadurch weiterbilden, dass die Lastaufnahmeeinrichtungen wenigstens zwei Stufen enthalten, die im Falle eines Unfalls von der Steuerung in Abhängigkeit von den Insassenparametem direkt oder indirekt betreibbar sind, wobei vorzugsweise die Stufen der Lastaufnahmeeinrichtungen einzeln mit insbesondere jeweils unterschiedlichen Lastaufnahmeeigenschaften und/oder gleichzeitig mit addierten Lastaufnahmeeigenschaften betreibbar sind. Alternativ oder zusätzlich kann vorgesehen sein, dass die Lastaufnahmeeinrichtungen oder ggf. jede Stufe davon einzeln im Falle eines Unfalls von der Steuerung in Abhängigkeit von den Insassenparametern direkt oder indirekt abschaltbar sind. Weitere mit diesen Ausführungen kombinierbare Merkmale bestehen darin, dass die Lastaufnahmeeinrichtungen oder ggf. eine Stufe davon Deformationseinrichtungen, insbesondere mit längs eines Bewegungsweges spanabhebenden Schneidmessern und/oder materialdeformierenden Bolzen, und/oder Bremseinrichtungen, insbesondere einen Bremsschlitten mit vorzugsweise wenigstens zwei Bremskraftstufen, enthalten.

Mit Vorzug ist die Steuerung zum Erfassen der Sitzposition, des Angurtzustandes, der Grösse, des Gewichts und/oder der Körperhaltung des Insassen mittels der Detektionseinrichtungen ausgelegt.

Bei der vorstehenden Ausführung kann die Steuerung vorzugsweise zum Auslösen der Antriebseinrichtungen in Abhängigkeit von der Sitzposition des Insassen und insbesondere zum Erfassen eines vorgebbaren Abstandes oder einer Unterschreitung eines vorgebbaren Abstandes der Position des Sitzes für den Insassen vom Lenkrad mittels der Detektionseinrichtungen ausgelegt sein. Bei letzterer Ausgestaltung ist es ferner bevorzugt, wenn die Steuerung zum Auslösen eines solchen Betriebsmodus der Verstelleinrichtungen ausgelegt ist, bei dem im Falle eines Unfalls bei einem erfaßten vorgebbaren Abstand oder einer erfaßten Unterschreitung eines vorgebbaren Abstandes der Position des Sitzes für den Insassen vom Lenkrad die Antriebseinrichtungen der Verstelleinrichtungen ausgelöst werden. Eine vorteilhafte Weiterbildung davon besteht darin, dass die Steuerung zum Betreiben der Lastaufnahmeeinrichtungen oder ggf. jeder Stufe davon einzeln in Abhängigkeit vom Angurtzustand und/oder der Sitzposition des Insassen ausgelegt ist, wobei die Steuerung insbesondere zum Auslösen eines solchen Betriebsmodus der Verstelleinrichtungen ausgelegt ist, bei dem im Falle eines Unfalls bei einem nicht angegurteten Insassen die Lastaufnahmeeinrichtungen oder zumindest eine Stufe davon wirksam sind/ist. Alternativ oder zusätzlich kann die Steuerung zum Auslösen eines solchen Betriebsmodus der Verstelleinrichtungen ausgelegt sein, bei dem im Falle eines Unfalls bei einem erfaßten vorgebbaren Abstand oder einer erfaßten Unterschreitung eines vorgebbaren Abstandes der Position des Sitzes für den Insassen vom Lenkrad die Lastaufnahmeeinrichtungen oder zumindest eine Stufe davon unwirksam sind/ist.

Es ist ferner bevorzugt, dass die Detektionseinrichtungen Positionserkennungseinrichtungen des Sitzes für den Insassen, Zustandserkennungseinrichtungen des Gurtschlosses für den Anschnallgurt des Insassen, Grössen-, Gewichts- und/oder Körperhaltungserkennungseinrichtungen bezüglich des Insassen enthalten. Dabei können die Positionserkennungseinrichtungen des Sitzes für den Insassen insbesondere wenigstens einen elektrischen oder optischen Schalter in oder im Zusammenhang mit Sitzführungsschienen enthalten, und/oder die Zustandserkennungseinrichtungen des Gurtschlosses für den Anschnallgurt des Insassen wenigstens einen elektrischen oder optischen Schloßnutzungsschalter enthalten.

Das weiter oben angegebene Ziel der vorliegenden Erfindung wird auch mit einem Verstellverfahren für eine Lenksäule eines Fahrzeuges erreicht, mit Verstelleinrichtungen, die im Falle eines Unfalls ausgelöst werden, um zumindest einen Lenkrad-Endbereich der Lenksäule von einem Insassen weg zu bewegen, wobei die Verstelleinrichtungen mittels Lastaufnahmeeinrichtungen, die in Abhängigkeit von Insassenparametern steuerbar sind, eine Bewegung zumindest des Lenkrad-Endbereiches der Lenksäule von einem Insassen weg dämpfen, und wobei die Lastaufnahmeeinrichtungen gesteuert werden, um in Abhängigkeit von Insassenparametem wenigstens einen darin enthaltenen Lastaufnehmer durch einen verstellbaren Bolzen ausser Funktion zu setzen.

Vorzugsweise Weiterbildungen dieses Verstellverfahrens kennzeichnen sich durch eine oder mehrere der nachfolgend angegebenen Ausgestaltungen:
- Der wenigstens eine Lastaufnehmer wird durch Entriegelung seiner Befestigung mit dem verstellbaren Bolzen ausser Funktion gesetzt.
- Der wenigstens eine Lastaufnehmer wird in Abhängigkeit von Insassenparametern steuerbar mit dem verstellbaren Bolzen ausser Funktion gesetzt.
- Die Lastaufnahmeeinrichtungen sind für wenigstens zwei Betriebsmodi ausgelegt, wobei vorzugsweise eine Steuerung zum Erfassen von Insassenparametern mittels Detektionseinrichtungen und zum Auslösen eines Betriebsmodus der Verstelleinrichtungen in Abhängigkeit von den Insassenparametern betrieben wird.
- Die Verstellung eines Bolzens macht diesen Bolzen unwirksam.
- Der Bolzen wird mittels eines Elektromagneten verstellt.
- Der verstellbare Bolzen wird pyrotechnisch entriegelt wird, wobei der Bolzen vorzugsweise über eine Sprengladung verfügt, die insbesondere ggf. von der Steuerung und/oder elektrisch gezündet wird.
- Die Lastaufnahmeeinrichtungen enthalten wenigstens zwei Lastaufnehmer, die durch jeweils einen verstellbaren Bolzen getrennt ausser Funktion gesetzt werden.
- Die Lastaufnahmeeinrichtungen enthalten wenigstens zwei Lastaufnehmer, die jeweils getrennt oder auch gleichzeitig ausser Funktion gesetzt werden oder gleichzeitig in Funktion bleiben, so dass die Lastaufnahmewirkungen von wenigstens zwei Lastaufnehmem addiert wirken.
- Die Lastaufnahmeeinrichtungen enthalten wenigstens zwei Lastaufnehmer, die einstükkig ausgeführt sind.
- Jeder Lastaufnehmer enthält ein Lastaufnahmeblech.
- Wenigstens zwei Lastaufnehmer enthalten ein gemeinsames Lastaufnahmeblech.
- Das Lastaufnahmeblech ist ein Stanzteil, das insbesondere Reisslinien enthält.
- Die Lenksäule enthält zwei Teleskopteile, von denen dasjenige, das einen Lenkrad-Endbereich enthält, durch Belastung durch einen auf das Lenkrad auftreffenden Insassen in oder über das andere Teleskopteil geschoben wird, und jedes oder das Lastaufnahmeblech mit einem Schlitten, der mit einem Teleskopteil der Lenksäule fest verbunden ist, durch den/die Bolzen lösbar verbunden ist und mit dem anderen Teleskopteil der Lenksäule fest verbunden ist,
und wobei weiter bevorzugt durch Verstellen eines Bolzens dieser Bolzen wirkungslos wird und das Lastaufnahmeblech und der Schlitten entkoppelt sind.

Vorzugsweise wird dabei ein Antrieb der Verstelleinrichtungen zum Bewirken der Bewegung zumindest des Lenkrad-Endbereiches der Lenksäule vom Insassen weg im Falle eines Unfalls in Abhängigkeit von den Insassenparametern ausgelöst und/oder eine Bewegung zumindest des Lenkrad-Endbereiches der Lenksäule von einem Insassen weg im Falle eines Unfalls in Abhängigkeit von den Insassenparametern gedämpft. Gemäß einer bevorzugten Weiterbildung der letztgenannten Verfahrensvariante wird eine Dämpfung der Bewegung zumindest des Lenkrad-Endbereiches der Lenksäule von einem Insassen weg im Falle eines Unfalls in Abhängigkeit von den Insassenparametern insbesondere wahlweise in einzelnen Stufen abgeschaltet.

Bei dem erfindungsgemäßen Verfahren ist es mit Vorteil auch möglich, dass die Sitzposition, der Angurtzustand, die Grösse, das Gewicht und/oder die Körperhaltung des Insassen als Insassenparameter erfaßt werden/wird. Dabei ist es bevorzugt, dass die Verstelleinrichtungen in Abhängigkeit von der Sitzposition des Insassen angetrieben werden, wobei insbesondere die Verstelleinrichtungen im Falle eines Unfalls bei einem erfaßten vorgebbaren Abstand oder einer erfaßten Unterschreitung eines vorgebbaren Abstandes der Position des Sitzes für den Insassen vom Lenkrad gemäß einem Betriebsmodus nicht angetrieben werden. Alternativ oder zusätzlich können die Verstelleinrichtungen in Abhängigkeit vom Angurtzustand und/oder von der Sitzposition des Insassen gedämpft werden. Bei der letzteren Vorgehensweise können ferner die Verstelleinrichtungen im Falle eines Unfalls bei einem nicht angegurteten Insassen gemäß einem Betriebsmodus ganz oder teilweise gedämpft werden und/oder können die Verstelleinrichtungen im Falle eines Unfalls bei einem erfaßten vorgebbaren Abstand oder einer erfaßten Unterschreitung eines vorgebbaren Abstandes der Position des Sitzes für den Insassen vom Lenkrad gemäß einem Betriebsmodus ganz oder teilweise gedämpft werden.

Weitere bevorzugte und vorteilhafte Ausgestaltungen ergeben sich aus Kombinationen der abhängigen Ansprüche sowie aus dem gesamten Offenbarungsgehalt der vorliegenden Unterlagen.

Mit der vorliegenden Erfindung werden somit eine Lenksäule sowie ein Verstellverfahren für eine Lenksäule gemäß eingangs angegebenen älteren Anmeldungen in vorteilhafter Weise weiter verbessert.

Anhand der nachfolgend beschriebenen und in den Zeichnungen dargestellten Ausführungsund Anwendungsbeispiele wird die Erfindung näher erläutert.
- Fig. 1: zeigt schematisch Betriebsmodi von Verstelleinrichtungen eines ersten Ausführungsbeispiels einer Lenksäule,
- Fig. 2: zeigen schematisch ein Schalt- und Aufbauschema der Steuerung des ersten Ausführungsbeispiels der Lenksäule von Fig. 1,
- Fig. 3a, 3b und 3c: zeigen schematisch die Verstelleinrichtungen des ersten Ausführungsbeispiels der Lenksäule von Fig. 1 in einer Ansicht von unten (linke Hälfte von Fig. 3a) und oben (rechte Hälfte von Fig. 3a) bzw. entsprechende Querschnitte,
- Fig. 4: zeigen schematisch die Antriebseinrichtungen des ersten Ausführungsbeispiels der Lenksäule von Fig. 1,
- Fig. 5: zeigen schematisch die Lastaufnahmeeinrichtungen des ersten Ausführungsbeispiels der Lenksäule von Fig. 1, und
- Fig. 6 bis 8: zeigen schematisch in einer Querschnittsansicht ein zweites Ausführungsbeispiel einer Lenksäule vor einer Auslösung, nach einer Auslösung bei einem kleinen Insassen bzw. nach einer Auslösung bei einem grossen.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann • verständlich.

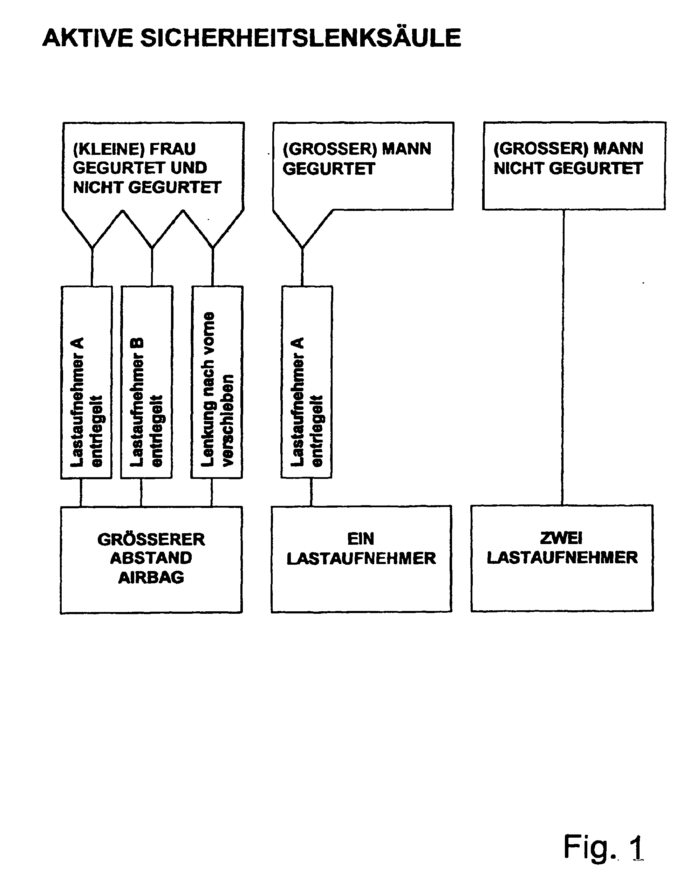

Unter Bezugnahme auf die Fig. 1, 2, 3a, 3b, 3c, 4 und 5, denen weitere Einzelheiten und Angaben zu entnehmen sind, werden nachfolgend weitere Merkmale, Funktionen und Vorteile der vorliegenden Erfindung anhand eines ersten Ausführungsbeispiels lediglich exemplarisch näher erläutert.

Dieses Ausführungsbeispiel betrifft eine aktive Sicherheitslenksäule für die drei wichtigsten Beanspruchungen im Falle eines Unfalls, wie es durch das Schema der Fig. 1 verdeutlicht wird, die den Aufbau und die Betriebsmodi für die entsprechende Lenksäule zeigt. Bei diesem ersten Ausführungsbeispiel sind entsprechend drei Anforderungen bei einem Unfall drei auf die jeweiligen Insassenparameter abgestimmte Betriebsmodi vorgesehen:
1. Mehr Airbagabstand bei kleinen Personen, indem einerseits das Lenkradende der Lenksäule infolge eines Front-Unfalls aktiv beispielsweise durch einen pyrotechnisch angetriebenen Zylinder vom Insassen wegbewegt wird, verhindert die Verletzungsgefahr solcher kleinen Personen durch den Airbag selbst, da sie sich sonst jedenfalls durch die unfallbedingte abrupte trägheitsbedingte Vorwärtsbewegung zu dem Lenkrad hin zu nahe an dem sich mit Wucht aufblasenden Airbag aufhalten würden, und andererseits Lastaufnehmer, die für Betriebsmodi für grosse Personen vorgesehen sind (siehe nachfolgend die Punkte 2. und 3.), ausser Funktion gesetzt werden;
2. Lastspitzenabbau bei großen angeschnallten Personen, indem infolge eines Front-Unfalls das Lenkradende der Lenksäule nicht aktiv vom Insassen wegbewegt wird (ein z.B. für eine aktive Rückziehung des Lenkradendes der Lenksäule vorgesehener pyrotechnisch angetriebener Zylinder wird nicht ausgelöst) und gleichzeitig dafür gesorgt wird, dass ein für diesen Anwendungsfall vorbestimmter Lastaufnehmer A zum Einsatz kommt, der beim Auftreffen des Insassen auf das Lenkrad dadurch für eine entsprechende Energieabsorption sorgt, dass eine Bewegung zumindest des Lenkradendes der Lenksäule bedingt durch das Auftreffen des Insassen mit dem Lastaufnehmer abgebremst wird; und
3. großer Lastspitzenabbau bei großen unangeschnallten Personen, indem infolge eines Front-Unfalls das Lenkradende der Lenksäule nicht aktiv vom Insassen wegbewegt wird (ein z.B. für eine aktive Rückziehung des Lenkradendes der Lenksäule vorgesehener pyrotechnisch angetriebener Zylinder wird nicht ausgelöst) und gleichzeitig dafür gesorgt wird, dass zwei für diesen Anwendungsfall vorbestimmte Lastaufnehmer A und B simultan und additiv zum Einsatz kommen, die beim Auftreffen des Insassen auf das Lenkrad dadurch für eine entsprechende Energieabsorption sorgen, dass eine Bewegung zumindest des Lenkradendes der Lenksäule bedingt durch das Auftreffen des Insassen mit den Lastaufnehmern A und B abgebremst wird.

Bei dem ersten Ausführungsbeispiel ist somit eine zweifache parallel geschaltete Lastbegrenzung vorgesehen, die in Kombination bei nicht angeschnallten großen Personen die hohe Last abbaut. Bei nicht angeschnallten schweren Fahrern ist eine wesentlich größere Lastaufnahme notwendig, als es heutzutage in der Praxis üblich ist. Heutige aus der Praxis bekannte Sicherheitslenksäulen sind beispielsweise in einem "Schlitten" (siehe Fig. 1, 2, 3a, 3b, 3c und 4 sowie zugehörige Beschreibung) gelagert. Dieser "Schlitten" bewegt sich bei Überschreitung einer konstruktiv festgelegten Lastgrenze gegen ein sich verformendes Blech, wodurch gemäß der vorliegenden Erfindung die hohe Lastspitze bei schweren Fahrern mit beiden Lastaufnehmern A und B abgebaut wird.

Bei angeschnallten großen Fahrern (erkennbar z.B. durch einen Schalter im Gurtschloß) wird bei einem Crash oder Unfall eine der beiden Lastbegrenzungen (z.B. der Lastaufnehmer A) außer Funktion gesetzt. Dies geschieht beispielsweise durch Entriegelung der Befestigung einer der Lastbegrenzungen durch einen Elektromagneten, einen pyrotechnisch entriegelbaren Bolzen o.ä.

Bei kleinen Fahrern (erkennbar z.B. durch einen Schalter in der Sitzschiene zur Lageabfrage) werden beide Lastaufnehmer A und B entriegelt und der Schlitten pyrotechnisch verfahren, um den nötigen Abstand zum explodierenden Airbag zu bekommen. Damit wird ein besonderer Vorteil der vorliegenden Erfindung erreicht.

Die Gewichtserkennung des großen Fahrers und die Positionserkennung z.B. einer kleinen Fahrerin können natürlich auch mittels elektronischer Gewichts- und Lagesensoren, die momentan vielerorts entwickelt werden, oder auf andere geeignete, dem Fachmann ohne weiteres bekannte oder zugängliche Arten ermittelt werden.

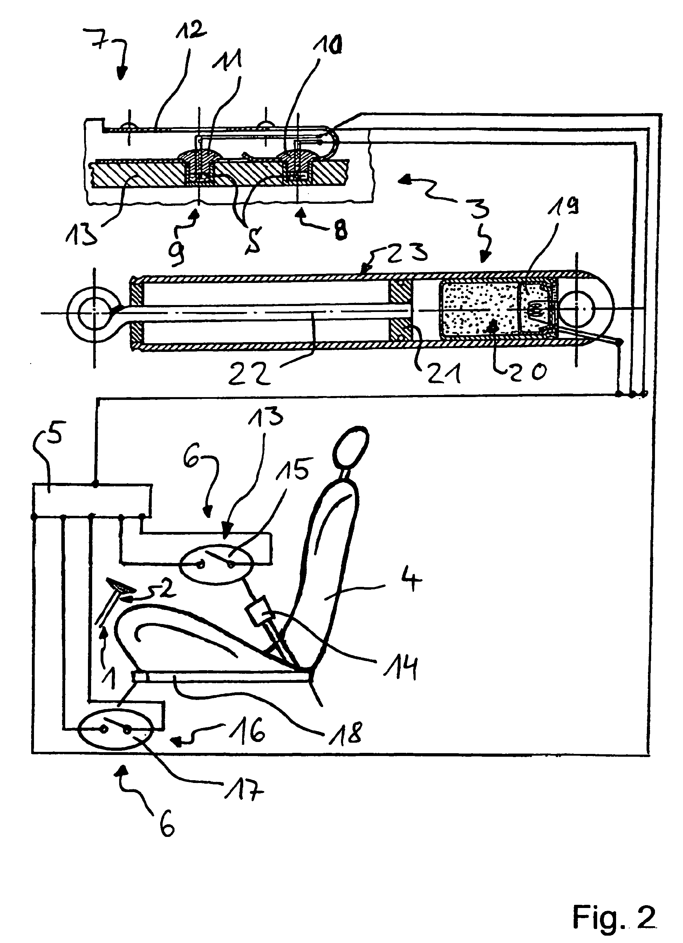

Die Fig. 2 verdeutlicht schematisch das Schaltschema des ersten Ausführungsbeispiels.

Eine nur angedeutet dargestellte Lenksäule 1 für ein Fahrzeug (nicht gezeigt) hat einen üblichen teleskopischen Aufbau, auf den wegen seiner Bekanntheit in zahlreichen Ausführungsformen hier nicht weiter eingegangen wird, da sich die vorliegende Erfindung bei allen bekannten Ausgestaltungen auch insgesamt rückziehbarer, nicht teleskopisch zusammenschiebbarer Lenksäulen anwenden läßt und die vorliegende Erfindung nicht die eigentliche Bauart solcher Lenksäulen betrifft. Die Lenksäule 1 hat einen Lenkrad-Endbereich 2 und ist mit Verstelleinrichtungen 3 versehen, die im Falle eines Unfalls auslösbar sind, um zumindest den Lenkrad-Endbereich 2 der Lenksäule 1 von einem Insassen (nicht gezeigt) weg zu bewegen, der auf einem Sitz 4 sitzt. Die Verstelleinrichtungen 3 sind für die drei in der Fig. verdeutlichten Betriebsmodi ausgelegt. Eine Steuerung 5 erfaßt mittels Detektionseinrichtungen 6 Insassenparameter und löst in Abhängigkeit von den Insassenparametern einen Betriebsmodus der Verstelleinrichtungen 3 aus.

Die Verstelleinrichtungen 3 enthalten Lastaufnahmeeinrichtungen 7 mit einem ersten und einem zweiten Lastaufnehmer oder -begrenzer 8 (A) bzw. 9 (B), die jeweils einen eigenen Bolzen 10 bzw. 11 und ein gemeinsames Lastaufnahmeblech 12 enthalten, die Deformationseinrichtungen (D) bilden. Durch die Bolzen 10 und 11 ist das Lastaufnahmeblech 12 mit einem Schlitten 13 verbunden. Das Lastaufnahmeblech 12 ist mit einem Teleskopteil (nicht gezeigt) der Lenksäule 1 fest verbunden, und der Schlitten 13 ist mit dem anderen Teleskopteil (nicht gezeigt) der Lenksäule 1 fest verbunden. Wird das Teleskopteil (nicht gezeigt) der Lenksäule 1, das den Lenkrad-Endbereich 2 enthält, durch einen auf das Lenkrad (nicht bezeichnet) auftreffenden Insassen (nicht dargestellt) belastet, so wird es in oder über das andere Teleskopteil geschoben. Diese Bewegung wird durch die Lastaufnahmeeinrichtungen 7 gedämpft, da das Lastaufnahmeblech 12 selbst und/oder gegen die Bolzen 10 und 11 verformt werden muß.

Die Bolzen 10 und 11 verfügen jeweils über eine Sprengladung S, die von der Steuerung 5, die beispielsweise verbunden ist mit oder integriert ist in einer Gesamtsteuerung (nicht gezeigt) für einen Airbag, jeweils unabhängig voneinander elektrisch gezündet werden können, um jeden der Bolzen 10 und 11 entsprechend unwirksam zu machen. An die Steuerung 5 sind als Detektionseinrichtungen 6 Zustandserkennungseinrichtungen 13 eines Gurtschlosses 14 in Form eines Gurt- oder Schloßnutzungsschalters 15 angeschlossen. Dieser Gurtnutzungsschalter 15 führt zu einem Gurtnutzungssignal, wenn der Insasse seinen Sicherheitsgurt (nicht gezeigt) vorschriftsmäßig angelegt hat. Wird das Gurtnutzungssignal nicht erzeugt, so ist die Steuerung darüber informiert, dass der Insasse nicht ordnungsgemäß angeschnallt ist.

Weiterhin sind in den Detektionseinrichtungen 6 Positionserkennungseinrichtungen 16 enthalten, die durch einen Positionsschalter 17 in einer Sitzschiene 18 des Sitzes 4 gebildet sind. Dieser Positionsschalter 17 führt zu einem Nahpositionssignal, wenn der Sitz 4 die Position des Positionsschalters 17 erreicht hat oder näher als der Positionsschalter 17 an der Lenksäule 1 ist. Dadurch erhält die Steuerung 5 die Information, dass es sich bei dem Insassen um eine kleine Person handelt. Wird das Nahpositionssignal nicht erzeugt, so ist die Steuerung darüber informiert, dass es sich bei dem Insassen um eine grosse Person handelt.

Durch die möglichen Kombinationen von Gurtnutzungssignal und Nahpositionssignal kann die Steuerung 5 jeden der drei Betriebsmodi der Verstelleinrichtungen 3 gemäß der Fig. 1 einstellen.

Hat die Steuerung 5 das Nahpositionssignal erhalten, so veranlaßt sie den Betriebsmodus für eine angeschnallte oder nicht angeschnallte "kleine Frau". In diesem Modus zündet die Steuerung 5 die Sprengladungen S der beiden Bolzen 10 und 11, so dass diese wirkungslos werden und das Lastaufnahmeblech 12 und der Schlitten 13 entkoppelt sind. Ferner zündet die Steuerung 5 einen pyrotechnischen Sprengsatz 19 eines Gasgenerators 20, und das von diesem erzeugte Gas beaufschlagt einen Kolben 21 mit einer Kolbenstange 22, die an das den Lenkrad-Endbereich 2 enthaltende Teleskopteil (nicht dargestellt) der Lenksäule 1 fest so angebunden ist, dass die beiden Teleskopteile (nicht dargestellt) der Lenksäule 5 zusammengezogen werden. Die Teile 19 bis 22 sind Bestandteile der Verstelleinrichtungen 3 und bilden zusammen Antriebseinrichtungen 23. Durch das Zusammenziehen oder Zurückziehen der Lenksäule 1 wird für die "kleine Frau", die relativ nahe am Lenkrad (nicht bezeichnet) sitzt, mehr Freiraum geschaffen, so dass sie von einem sich bei einem Unfall aufblasenden Airbag (nicht dargestellt) nicht oder zumindest nicht fest getroffen wird.

Hat die Steuerung 5 das Nahpositionssignal nicht erhalten, überprüft sie, ob das Gurtnutzungssignal gegeben ist. Liegt das Gurtnutzungssignal vor, so veranlaßt die Steuerung 5 den Betriebsmodus für einen angeschnallten "grossen Mann". In diesem Modus zündet die Steuerung 5 die Sprengladung S nur des Bolzens 11, so dass nur dieser wirkungslos wird und das Lastaufnahmeblech 12 und der Schlitten 13 noch durch den Bolzen 10 gekoppelt sind. Der Lastaufnehmer 8 (A) ist damit wirksam, um Energie abzubauen, die beim Aufprall des angeschnallten "grossen Mannes" auf das Lenkrad (nicht bezeichnet) auftritt. Die Antriebseinrichtungen 23 werden nicht ausgelöst.

Erhält die Steuerung 5 weder das Nahpositionssignal noch das Gurtnutzungssignal erhalten, so veranlaßt die Steuerung 5 den Betriebsmodus für einen unangeschnallten "grossen Mann". In diesem Modus zündet die Steuerung 5 keine Sprengladung S, so dass das Lastaufnahmeblech 12 und der Schlitten 13 durch beide Bolzen 10 und 11 gekoppelt sind. Der Lastaufnehmer 8 (A) und der Lastaufnehmer 9 (B) sind damit wirksam, um Energie abzubauen, die beim Aufprall des unangeschnallten "grossen Mannes" auf das Lenkrad (nicht bezeichnet) auftritt. Die Antriebseinrichtungen 23 werden nicht ausgelöst.

Signalleitungen zwischen der Steuerung 5 und den Sprengladungen S, dem pyrotechnischen Sprengsatz 19 sowie den Detektionseinrichtungen 6 sind als Linien oder Striche in der Fig. 2 eingezeichnet.

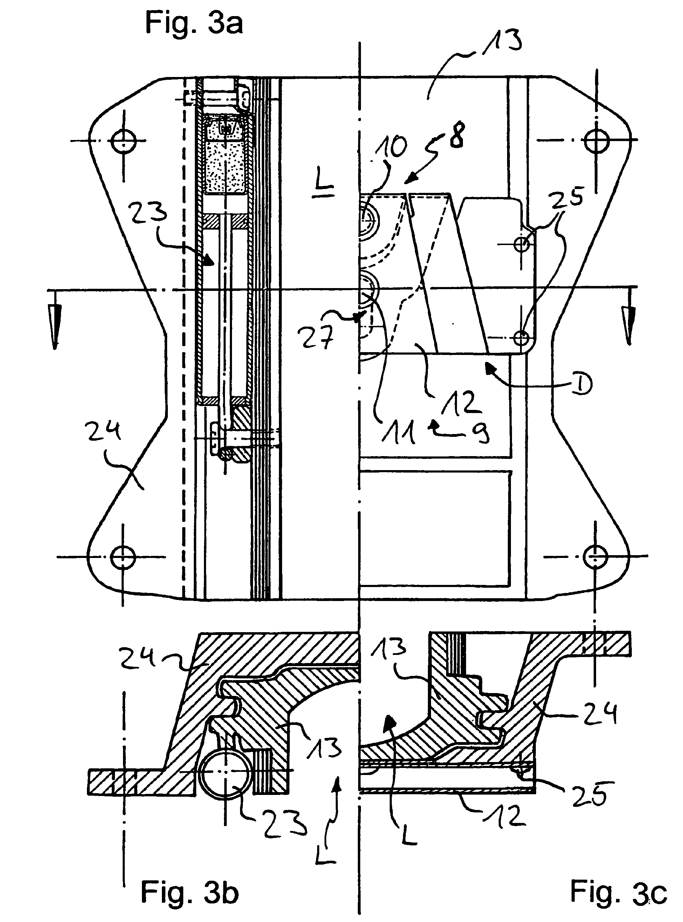

Die Fig. 3a, 3b und 3c zeigen einen Schlitten 13 zur Aufnahme der Lenkung (nicht gezeigt) in seiner Schlittenaufnahme 24 in der Fig. 3a links von unten und rechts von oben und in den Fig. 3b und 3c jeweils geschnitten. Der pyrotechnische Gasgenerator 20 der Antriebseinrichtungen 23 ist einerseits an der Schlittenaufnahme 24 und andererseits am Schlitten 13 befestigt.

Auf der rechten Seite der Fig. 3a sind der Lastaufnehmer 8 (A) und der Lastaufnehmer 9 (B) einstückig in Einbaulage gezeigt. Die Lastaufnehmer 8 und 9 sind einerseits mit den Bolzen 10 bzw. 11 am Schlitten 13 und andererseits an der Schlittenaufnahme 24 mit Verschraubungen 25 versehen. Der verschiebbare Teleskopteil (nicht gezeigt) der Lenksäule 1 wird in der Ausnehmung L fest montiert.

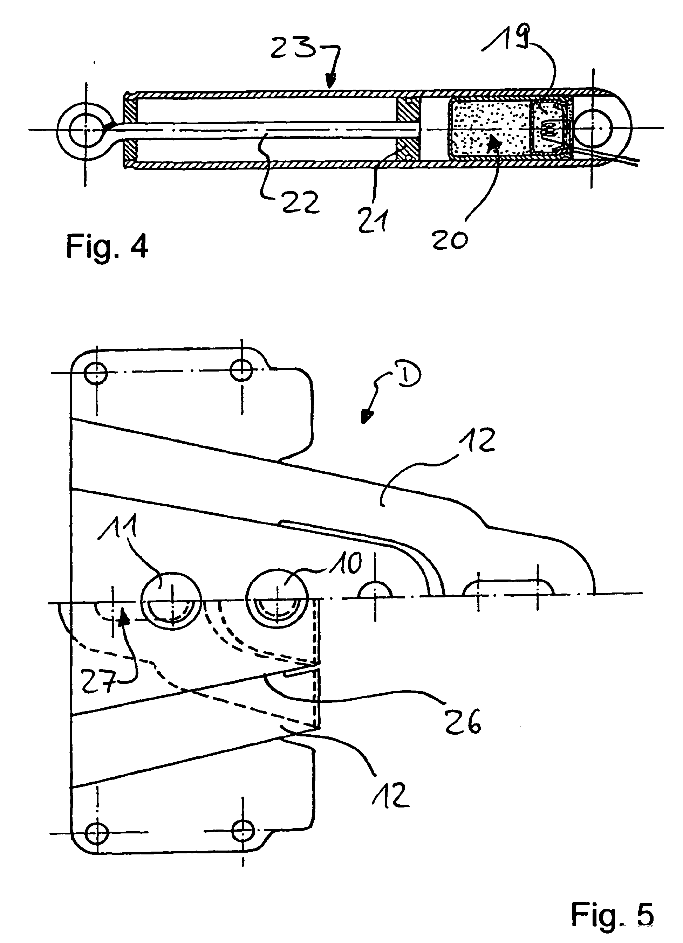

Die Antriebseinrichtungen 23 sind in der Fig. 4 gesondert dargestellt, wie sie bereits im Zusammenhang mit der Fig. 2 erläutert wurden.

Die Fig. 5 zeigt oben vor, d.h. in einem einbaufertigen Zustand, und unten nach einer Betätigung beider Lastaufnehmer 8 und 9 das Lastaufnahmeblech 12, bei dem es sich um ein Stanzteil handelt.

Als weitere erfinderische Besonderheit ist der Lastbegrenzer 8 (A) derart gestaltet, daß er mittels des Bolzens 10 sofort bei einer Lastüberschreitung an Reißlinien 26 einreißt. Dabei schiebt sich das Ende des Lastbegrenzers 8 (A) zwangsläufig über den Lastbegrenzer 9 (B), dessen Bolzen 11 sich vorerst in einem Schlitz 27 des Lastbegrenzers 9 (B) bewegt. Diese Auslegung führt in vorteilhafter Weise dazu, daß sich die Ausreißkräfte der beiden Lastaufnehmer 8 (A) und 9 (B) addieren. Würden sie parallel nebeneinander einreißen, würde nur einer der beiden Lastaufnehmer A oder B arbeiten.

Durch die Erfindung wird somit gemäß des ersten Ausführungsbeispiels insbesondere eine Sicherheitslenksäule mit einem Crashschlitten geschaffen, der zwei Lastaufnehmer hat, für angeschnallte und nicht angeschnallte große und kleine Personen. Gemäß einer bevorzugten Weiterbildung dieser Ausführung erfolgt eine Steuerung mit einem Schloßnutzungsschalter. In weiterer Fortbildung der Erfindung wird der Crashschlitten für die kleine Personen als "Abstandsschlitten" genutzt und werden seine Lastaufnehmer außer Betrieb gesetzt. Eine Feststellung kleiner Personen kann bevorzugt über eine elektrische Sitzlageerkennung erfolgen.

Besonders bevorzugt ist es gemäß der vorliegenden Erfindung, wenn die Lastaufnehmer derart hintereinander laufend gebaut sind, z.B. mittels eines Schlitzes in einer Anbindung, zum verzögerten Anlauf, daß sich die Lastaufnahmen bei der Last addieren.

Lediglich der Vollständigkeit halber wird noch darauf hingewiesen, dass die beiden Teleskopteile, wie z.B. ineinander gesteckte Rohre, der Lenksäule 1 im Normalbetrieb zwar einerseits fixiert sind, so dass sie nicht ohne weiteres zusammengeschoben werden können, dass aber diese Fixierung andererseits so schwach ist (z.B. Kunststoffbolzen), dass dadurch erstens keine merkliche Lastaufnahme für einen grossen (unangeschnallten) Fahrer erreicht werden kann, und zweitens der Rückzug der Lenksäule durch die Antriebseinrichtungen bei einem kleinen (angeschnallten) Fahrer nicht spürbar behindert wird. Dies gilt für das bereits erläuterte Ausführungsbeispiel ebenso, wie für das nachfolgend erläuterte zweite Ausführungsbeispiel.

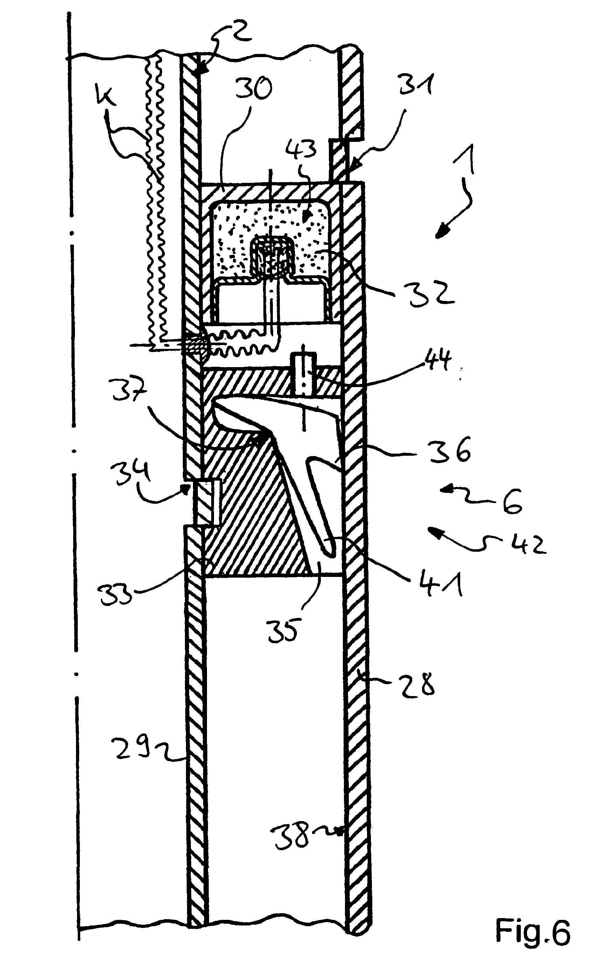

Unter Bezugnahme auf die Fig. 6 bis 8, denen weitere Einzelheiten und Angaben zu entnehmen sind, werden nachfolgend weitere Merkmale, Funktionen und Vorteile der vorliegenden Erfindung anhand eines zweitens Ausführungsbeispiels lediglich exemplarisch näher erläutert. Insbesondere betrifft dieses Ausführungsbeispiel eine Sicherheitslenksäule mit pyrotechnisch angetriebener Verkürzung bei kleinen Fahrern und Lastspitzenabbau bei großen Fahrern. Heutige Lenksäulen sind zum Teil als Ergänzung zu einem Airbag bereits mit einem Lastspitzenabbau für schwere Personen ausgerüstet. Die Praxis hat ferner gezeigt, daß kleine und zu dicht am Airbag positionierte Fahrer teilweise durch diesen zu Tode kommen. Das zweite Ausführungsbeispiel schafft ebenfalls eine Lösung zum Lastspitzenabbau bei großen Fahrern und im gleichen System eine Lenksäulenverkürzung bei kleinen Fahrern bei einem Unfall.

Die Fig. 6 bis 8 zeigen ein Lenksäulenaussenrohr 28 und ein Lenksäuleninnenrohr 29, die die Teleskopteile einer Lenksäule 1 darstellen, wobei das Lenksäuleninnenrohr 29 den Lenkrad-Endbereich 2 der Lenksäule 1 enthält. An dem Lenksäulenaussenrohr 28 ist ein Aussenrohr-Ringkolben 30 beispielsweise durch eine Verclinchverbindung 31 befestigt. Der Aussenrohr-Ringkolben 30 enthält eine pyrotechnische Patrone 32, die mit Steuerkabeln K mit der Steuerung 5 (vergleiche Fig. 2) verbunden ist. Mit dem Lenksäuleninnenrohr 29 ist ein Innenrohr-Ringkolben 33 fest durch ebenfalls eine Verclinchverbindung 34 verbunden. Dieser Innenrohr-Ringkolben 33 enthält beim zweiten Ausführungsbeispiel ein oder mehrere in Schlitzen 35 gelagerte, entsprechend geformte Schneidemesser 36 als Teile von Deformationseinrichtungen 6. Die Schneidemesser 36 sind derart auf einem "Kipppunkt" 37 gelagert, daß sie bei Antrieb über den Innenrohr-Ringkolben 33 gezielt in die Wandung 38 des Lenksäulenaussenrohrs 28 der Lenksäule 1 einschneiden. Die Schneidtiefe 39 des Spanes 40 wird durch einen entsprechend geformten Anschlag 41 bestimmt. Die Größe des Spanes 40 ist proportional der gewünschten Lastaufnahme. Die Deformationseinrichtungen 6 bilden Lastaufnahmen 42.

Der Aussenrohr-Ringkolben 30 und der Innenrohr-Ringkolben 33 bilden Antriebseinrichtungen 23, die ebenso wie die Lastaufnahmen 42 Bestandteile der Verstelleinrichtungen 3 der Lenksäule 1 sind.

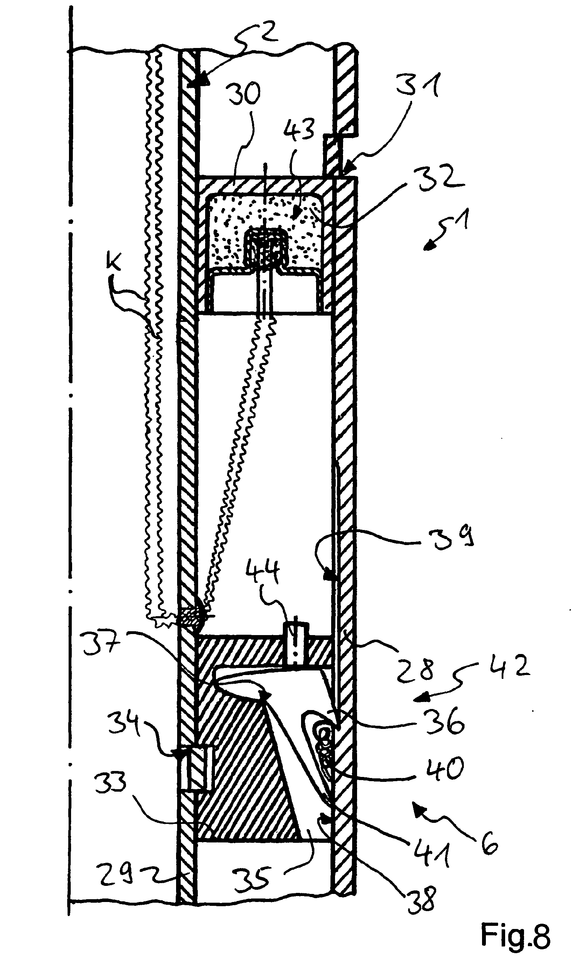

Die Fig. 8 zeigt eine entsprechende Lastaufnahme 42 in Funktion. Die Lastaufnahme 42

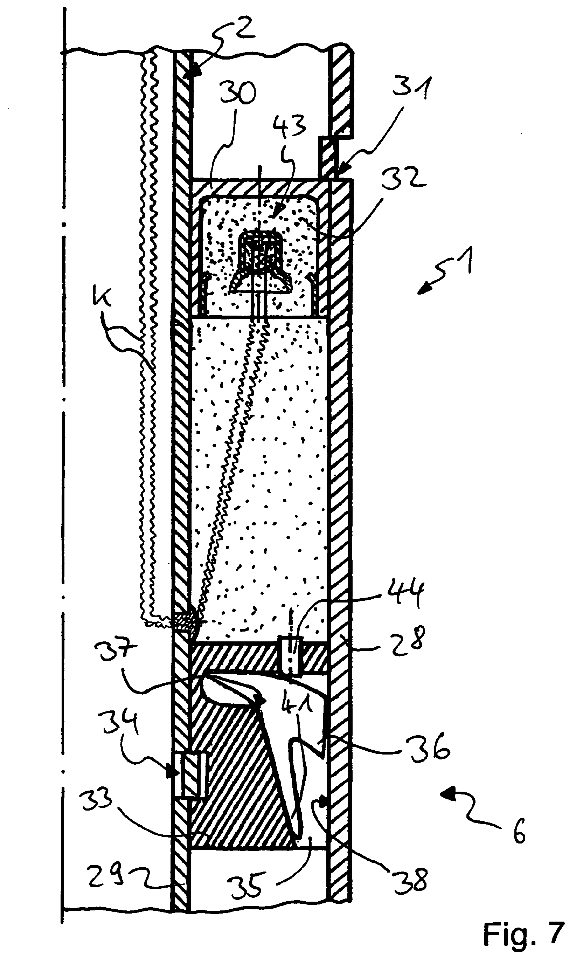

Die Fig. 7 zeigt die Funktion bei kleinen Fahrern. Hier drückt die Ladung 43 der pyrotechnische Patrone 32 den Innenrohr-Ringkolben 33 verbunden mit dem Lenksäuleninnenrohr 29 nach unten und damit von einem Insassen (nicht gezeigt) weg. Gleichzeitig verhindert ein vom Druck beaufschlagter Steuerstift 44 das Kippen des Schneidemessers 36 in die Stellung "Lastaufnahme", d.h. zur Spanabhebung in der Wandung 38 des Lenksäulenaussenrohrs 28 der Lenksäule 1.

Zusammenfassend läßt sich das in den Fig. 6 bis 8 verdeutlichte Ausführungsbeispiel der vorliegenden Erfindung folgendermaßen erläutern:

Ineinander schiebbare Lenksäulenrohre sind mit "Ringkolben" versehen, die bei kleinen Fahrern mittels eines pyrotechnischen Druckaufbaues dazwischen die Lenksäule verkürzen und damit einen sich aufblasenden Airbag auf eine größere Distanz bringen. In einem der Ringkolben ist eine lastaufnehmende Mechanik eingebaut, die bei großen Fahrern anstelle der Lenksäulenverkürzung wirksam wird und bei kleinen Fahrern mittels pyrotechnischem Druck außer Funktion gesetzt wird. Der zweite Ringkolben ist mit einer Lastaufnahmemechanik versehen. Im gezeigten Beispiel handelt es sich um entsprechend geformte und gelagerte kippbare Messer. Es kann sich hier ebenso um Wellrohre, materialverformende Kugeln o.ä. handeln (in den Figuren nicht gezeigt). Grundsätzlich ist die Funktion des lastaufnehmenden Ringkolbens derart, daß er automatisch Last aufnimmt und abbaut, wenn das innere Lenksäulenrohr relativ zum äußeren bewegt wird. Im gezeigten Fall wird das Messer spanabhebend in das äußere Lenksäulenrohr gedrückt. Alternativ kann diese Lastaufnahme bei einer pyrotechnischen Zündung bei entsprechender Leistung "überspielt" werden, oder wird das "Messer" wie im Beispiel durch einen druckbeaufschlagten Steuerstift außer Funktion gekippt.

Bei der Lenksäule eines Automobiles ist das innere und äußere Lenksäulenrohr beispielsweise auf möglichst großen Durchmesserunterschied ausgelegt. Wie es heute u.a. üblich ist, wird das äußere Lenksäulenrohr in Lagern positioniert (in den Figuren nicht gezeigt). Das innere Lenksäulenrohr ist zum äußeren formschlüssig mit entsprechenden Ringkolben (Nuten/Form) verbunden. Das Ringkolbenpaar ist z.B. durch Verclinchen mit je einem äußeren und je einem inneren Rohr verbunden. Ein Ringkolben beinhaltet eine pyrotechnische Ladung, deren Druck die Ringkolben voneinander weg drücken und damit die Lenksäule verkürzen bzw. das Lenkrad in Fahrtrichtung nach vom vom Insassen weg ziehen kann.

Kleine Fahrer können auch bei dem zweiten Ausführungsbeispiel festgestellt werden z.B. durch entsprechende elektronische Überwachungssysteme oder eine Sitzpositionserkennung mittels Schaltern in der Sitzschiene.

## Patentansprüche

1. Lenksäule für ein Fahrzeug, mit Verstelleinrichtungen (3), die im Falle eines Unfalls auslösbar sind, um zumindest einen Lenkrad-Endbereich (2) der Lenksäule (1) von einem Insassen weg zu bewegen, wobei die Verstelleinrichtungen (3) zum Dämpfen einer Bewegung zumindest des Lenkrad-Endbereiches (2) der Lenksäule (1) von einem Insassen weg Lastaufnahmeeinrichtungen (7) enthalten, die in Abhängigkeit von Insassenparametern steuerbar sind, **dadurch gekennzeichnet, daß** die Lastaufnahmeeinrichtungen (7) wenigstens einen Lastaufnehmer (8, 9) enthalten, der durch einen pyrotechnisch entriegelbaren Bolzen (10, 11), der über eine Sprengladung (S) verfügt, oder einen elektromagnetisch entriegelbaren Bolzen außer Funktion setzbar ist.

2. Lenksäule nach Anspruch 1,
wobei die Lastaufnahmeeinrichtungen (7) wenigstens zwei Lastaufnehmer (8, 9) enthalten, die durch jeweils einen verstellbaren Bolzen (10, 11) getrennt außer Funktion setzbar sind.

3. Lenksäule nach Anspruch 1 oder 2,
wobei der wenigstens eine Lastaufnehmer (8, 9) durch Entriegelung seiner Befestigung mit dem verstellbaren Bolzen (10, 11) außer Funktion setzbar ist.

4. Lenksäule nach einem der vorhergehenden Ansprüche,
wobei der wenigstens eine Lastaufnehmer (8, 9) in Abhängigkeit von Insassenparametern steuerbar mit dem verstellbaren Bolzen (10, 11) außer Funktion setzbar ist.

5. Lenksäule nach einem der vorhergehenden Ansprüche,
wobei die Lastaufnahmeeinrichtungen (7) für wenigstens zwei Betriebsmodi ausgelegt sind, wobei vorzugsweise eine Steuerung (5) zum Erfassen von Insassenparametern mittels Detektionseinrichtungen (6) und zum Auslösen eines Betriebsmodus der Verstelleinrichtungen (3) in Abhängigkeit von den Insassenparametern vorgesehen ist.

6. Lenksäule nach einem der vorhergehenden Ansprüche,
wobei der pyrotechnisch entriegelbare Bolzen (10, 11) über eine Sprengladung (S) verfügt, die von einer Steuerung (5) und/oder elektrisch zündbar ist.

7. Lenksäule nach einem der vorhergehenden Ansprüche,
wobei die Lastaufnahmeeinrichtungen (7) wenigstens zwei Lastaufnehmer (8, 9) enthalten, die jeweils getrennt und auch gleichzeitig außer Funktion setzbar sind oder gleichzeitig in Funktion bleiben können, so dass die Lastaufnahmewirkungen von wenigstens zwei Lastaufnehmern (8, 9) addiert sind.

8. Lenksäule nach einem der vorhergehenden Ansprüche,
wobei die Lastaufnahmeeinrichtungen (7) wenigstens zwei Lastaufnehmer (8, 9) enthalten, die einstückig ausgeführt sind.

9. Lenksäule nach einem der vorhergehenden Ansprüche,
wobei jeder Lastaufnehmer (8, 9) ein Lastaufnahmeblech (12) enthält.

10. Lenksäule nach einem der Ansprüche 1 bis 8,
wobei wenigstens zwei Lastaufnehmer (8, 9) ein gemeinsames Lastaufnahmeblech (12) enthalten.

11. Lenksäule nach Anspruch 10,
wobei das Lastaufnahmeblech (12) ein Stanzteil ist, das insbesondere Reißlinien (26) enthält.

## Claims

1. Steering column for a vehicle, having displacement devices (3) which can be triggered in the event of an accident in order to move at least one steering wheel end region (2) of the steering column (1) away from an occupant, wherein the displacement devices (3) contain load-receiving devices (7) in order to damp a movement of at least the steering wheel end region (2) of the steering column (1) away from an occupant, which load-receiving devices can be controlled in dependence upon occupant-parameters, **characterised in that** the load-receiving devices (7) contain at least one load-receiver (8, 9) which can be rendered inoperative by means of a pyrotechnically unlockable bolt (10, 11), which has an explosive charge (S), or an electromagnetically unlockable bolt.

2. Steering column as claimed in claim 1, wherein the load-receiving devices (7) contain at least two load-receivers (8, 9) which can be rendered inoperative separately by a respective displaceable bolt (10, 11).

3. Steering column as claimed in claim 1 or 2, wherein the at least one load-receiver (8, 9) can be rendered inoperative by unlocking its attachment to the displaceable bolt (10, 11).

4. Steering column as claimed in any one of the preceding claims, wherein the at least one load-receiver (8, 9) can be rendered inoperative in dependence upon occupant parameters in a controllable manner with the displaceable bolt (10, 11).

5. Steering column as claimed in any one of the preceding claims, wherein the load-receiving devices (7) are arranged for at least two operating modes, wherein preferably a control (5) for detecting occupant parameters by means of detection devices (6) and for triggering an operating mode of the displacement devices (3) in dependence upon the occupant parameters is provided.

6. Steering column as claimed in any one of the preceding claims, wherein the pyrotechnically unlockable bolt (10, 11) has an explosive charge (S) which can be ignited by a control (5) and/or electrically.

7. Steering column as claimed in any one of the preceding claims, wherein the load-receiving devices (7) contain at least two load-receivers (8, 9) which can each be rendered inoperative separately and also simultaneously or can remain operative at the same time, so that the load-receiving effects of at least two load-receivers (8, 9) are added together.

8. Steering column as claimed in any one of the preceding claims, wherein the load-receiving devices (7) contain at least two load-receivers (8, 9) which are formed as one piece.

9. Steering column as claimed in any one of the preceding claims, wherein each load-receiver (8, 9) contains a load-receiving plate (12).

10. Steering column as claimed in any one of claims 1 to 8, wherein at least two load-receivers (8, 9) contain a common load-receiving plate (12).

11. Steering column as claimed in claim 10, wherein the load-receiving plate (12) is a stamped part which contains in particular tear lines (26).

## Revendications

1. Colonne de direction pour un véhicule, comprenant des systèmes de réglage (3), qui peuvent être déclenchés dans le cas d'un accident, afin de déplacer au moins une région terminale côté volant (2) de la colonne de direction (1) en éloignement d'un occupant, dans laquelle les systèmes de réglage (3) contiennent, pour amortir un déplacement au moins de la région terminale côté volant (2) de la colonne de direction (1) en éloignement d'un occupant, des systèmes d'encaissement de charge (7) qui peuvent être commandés en fonction de paramètres relatifs à l'occupant,
**caractérisée en ce que** les systèmes d'encaissement de charge (7) contiennent au moins un moyen d'encaissement de charge (8, 9) qui peut être mis hors de fonction au moyen d'un boulon (10, 11) déverrouillable par voie pyrotechnique, qui dispose d'une charge explosive (5), ou au moyen d'un boulon déverrouillable par voie électromagnétique.

2. Colonne de direction selon la revendication 1,
dans laquelle les systèmes d'encaissement de charge (7) contiennent au moins deux moyens d'encaissement de charge (8, 9) qui peuvent être mis séparément hors de fonction au moyen d'un boulon réglable respectif (10, 11).

3. Colonne de direction selon la revendication 1 ou 2,
dans laquelle ledit au moins un moyen d'encaissement de charge (8, 9) peut être mis hors de fonction par déverrouillage de sa fixation avec le boulon réglable (10, 11).

4. Colonne de direction selon l'une des revendications précédentes,
dans laquelle ledit au moins un moyen d'encaissement de charge (8, 9) peut être mis hors de fonction de façon commandée en fonction de paramètres relatifs à l'occupant, avec le boulon réglable (10, 11).

5. Colonne de direction selon l'une des revendications précédentes,
dans laquelle les systèmes d'encaissement de charge (7) sont conçus pour au moins deux modes de fonctionnement, et il est de préférence prévu une commande (5) pour détecter des paramètres relatifs à l'occupant au moyen de systèmes de détection (6) et pour déclencher un mode de fonctionnement des systèmes de réglage (3) en fonction des paramètres relatifs à l'occupant.

6. Colonne de direction selon l'une des revendications précédentes,
dans laquelle le boulon (10, 11) déverrouillable par voie pyrotechnique dispose d'une charge explosive (S) qui peut être allumée par une commande (5) et/ou électriquement.

7. Colonne de direction selon l'une des revendications précédentes,
dans laquelle les systèmes d'encaissement de charge (7) contiennent au moins deux moyens d'encaissement de charge (8, 9) qui peuvent être mis hors de fonction respectivement séparément et également simultanément, ou qui peuvent rester en fonction simultanément, de sorte que les effets d'encaissement de charge d'au moins deux moyens d'encaissement de charge (8, 9) sont additionnés.

8. Colonne de direction selon l'une des revendications précédentes,
dans laquelle les systèmes d'encaissement de charge (7) contiennent au moins deux moyens d'encaissement de charge (8, 9) qui sont réalisés d'un seul tenant.

9. Colonne de direction selon l'une des revendications précédentes,
dans laquelle chaque moyen d'encaissement de charge (8, 9) contient une tôle d'encaissement de charge (12).

10. Colonne de direction selon l'une des revendications 1 à 8,
dans laquelle au moins deux moyens d'encaissement de charge (8, 9) contiennent une tôle d'encaissement de charge (12) commune.

11. Colonne de direction selon la revendication 10,
dans laquelle la tôle d'encaissement de charge (12) est une pièce poinçonnée, qui contient en particulier des lignes de déchirure (26).
